# EUROPEAN PATENT APPLICATION

(11) **EP 2 175 189 A1**
(43) Date of publication of application: **14.04.2010**
(21) Application number: 09425390.3
(22) Date of filing: 07.10.2009
(51) Int. Cl.: F21S 8/00, F21S 8/08, F21S 9/03

(54) **Apparatus for public illumination for streets and integrated structure**

(30) Priority: 13.10.2008 IT VI20080237
(71) Applicant: Beghelli S.p.A., 40050 Monteveglio, Bologna (IT)
(72) Inventor: Beghelli, Gian Pietro, 40050 Monteveglio Bologna (IT)
(74) Representative: Scilletta, Andrea

(57) **Abstract**

An integrated structure equipment for the public road lighting comprising a series of devices (1) applied to respective poles (3) of public lighting plants, wherein each device (1) includes a set of photovoltaic modules (2), of fixed type or with one or two axes movement, which are mechanically fixed to the lighting pole (3); every device (1) incorporates the functions of illuminating apparatus for the public night lighting and photovoltaic generator suitable for supplying to the electric supply network electricity generated by the photovoltaic modules (2) during the day.

## Description

The present invention refers generally to an integrated structure equipment for the public road lighting.

More particularly, the invention concerns a new equipment for the public road lighting, whose structure is integrated with one or more photovoltaic generators for the supply to the network or the auto-consumption of the electricity generated during daylight hours.

Street public lighting equipments consist of a set of poles, on which respective lighting projectors are mounted.

Such a structural configuration is optimally suited for the integration of one or more photovoltaic solar modules, which can be suitably mounted on the poles themselves, in order to achieve a significant energy saving not only at private circle but also at public structure level.

Purpose of the present invention is, therefore, to achieve an integrated structure equipment for the public road lighting which performs the functions of night public lighting, using, for switching on the public lighting during night, the electricity produced during the day and stored or supplied into the power network, by an appropriate photovoltaic generator (of the "grid connected" type), which is connected with the equipment.

Another purpose of the present invention is to create an integrated structure equipment for the public road lighting which allows to get a high energy saving and a consequent saving in energy costs.

A further purpose of the invention is to provide an integrated structure equipment for the public road lighting which can be applied to any public lighting pole currently in use and presents a very ease of installation and maintenance.

These and other purposes, according to the present invention, are achieved by implementing an integrated structure equipment for the public road lighting according to the claim 1 attached; additional specific technical and detail features are contained in the dependent claims.

In advantageous way, according to the invention, it is expected to mount one or more solar photovoltaic modules or panels at about half the height of each pole currently used for the public street lighting.

In a first possible embodiment of the invention, the photovoltaic modules are mounted in fixed position, properly oriented to the south and inclined of 40°-60° with respect to the horizontal plane, provided that such an installation does not jeopardize the optical functionality of the street projector (mounted at the top of the pole), during the night operation, creating unwanted shadows. In a second embodiment of the invention, the photovoltaic modules are provided with solar tracker having an axis (azimuth) or two axes (azimuth + zenith) and are equipped with an automatic mechanical device, suitable to put them in a rest position, vertically and parallel to the axis of the roadway during night hours, so that they do not jeopardize the correct illumination of the road throwing unwanted shadows.

In other embodiments of the invention, each photovoltaic module is mounted on a fixed inclination support, which rotates around the lighting pole in order to automatically track the apparent solar motion during the day, while, during the night, it places in the rest position, parallel to the road, always in order to not affect by means of awkward shadows the operation of the road projector during the night.

Finally, in further different configurations, some photovoltaic modules, carried out according to long and narrow dimensions (doors), may be arranged aligned horizontally in an integrated structure mounted on each lighting pole.

All the photovoltaic modules connected with the relative pole are connected with a lighting projector which contains an electronic device of energy conversion (photovoltaic inverter), which integrates the control electronics of the light source used (high-pressure discharge lamp or LED), the control electronics of the drive motor of each module and the supervision and remote management electronics.

Additional features and advantages of an integrated structure equipment for the public road lighting, in accordance with the present invention, will greatly result from the following description referring to various illustrative and preferred, but not limiting, embodiments of the invention and from the drawings attached, in which:
- figure 1 is a global view of an equipment for the public road lighting consisting of several integrated structures, according to the present invention;
- figure 2 is a perspective view of a first embodiment of the integrated structure equipment for the public road lighting, according to the present invention;
- figure 3 shows the circuit diagram of the electronic device used to manage the lighting and the energy conversion in each integrated structure equipment for the public road lighting, according to the present invention;
- figure 4 shows a partial front perspective view of an integrated structure equipment for the public road lighting, according to the present invention, in an operating position;
- figure 5 shows a rear perspective view of the equipment of figure 4, according to the present invention;
- figure 6 shows a partial front perspective view of an integrated structure equipment for the public road lighting, according to the present invention, in a rest position;
- figure 7 shows a rear perspective view of the equipment of figure 6, according to the present invention;
- figure 8 shows a partial side view of a second embodiment of the integrated structure equipment for the public road lighting, according to the present invention, in a first operating position;
- figure 9 shows a partial side view of the equipment of figure 8, according to the present invention, in a second operating position;
- figure 10 shows a partial rear perspective view of a further embodiment of the integrated structure equipment for the public road lighting, according to the present invention;
- figure 11 shows a partial side view of the equipment of figure 10, according to the present invention;
- figure 12 shows a perspective view of the equipment of figure 10, according to the present invention;
- figure 13 shows a partial side view of a portion of the equipment of figure 10, according to the present invention.

With reference to the figures mentioned, the integrated structure equipment for the public road lighting, according to the invention, comprises one or more illuminating devices, indicated generically with 1, each of which includes one or more photovoltaic modules or panels 2, applied to each road pole 3 of a public road lighting plant; each road pole 3 is also equipped with a lighting projector 4.

The photovoltaic modules 2 may be either of fixed or movable type, with one axis or two axes moving for the sunseeker, and are fixed, through an appropriate system of mechanical fastening, to the lighting pole 3, while the lighting projector 4 houses a light source, of discharge or power LED type, and an electronic device of conversion of the generated solar energy for the introduction into the electric and lamp supply system. The various parts are, furthermore, reciprocally connected through an electrical interconnection system.

It is also provided the use of at least one electronic control and management unit of an entire public road lighting plant, consisting of several lighting devices 1, each of which can be related to a corresponding lighting pole 3.

The photovoltaic modules 2 are generally mounted at about half the height of the lighting pole 3, in fixed position, and are properly oriented to the south and sloped at 40-60° with respect to the horizontal plane.

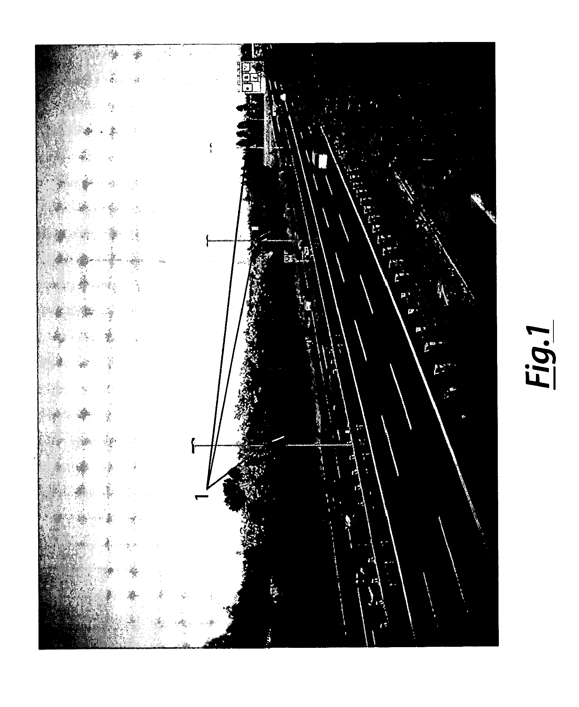

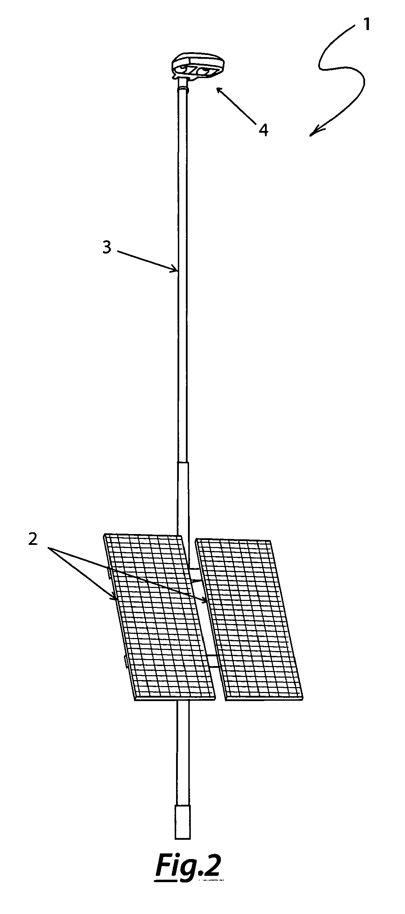

In any case, the photovoltaic modules 2 are installed in such a way as not to affect the functionality of the road projector 4, during night operation (as shown in the attached figures 1, 2, 4 and 5); in particular, these photovoltaic modules 2 must not be installed in order to cast unwanted shadows on the roadway to be lighted.

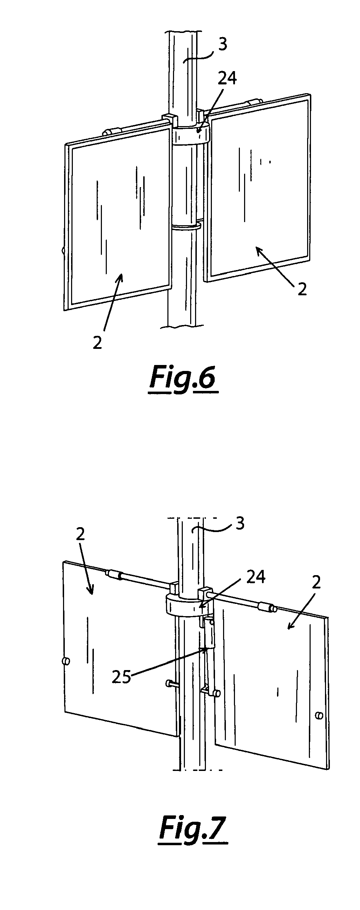

In other illustrative and preferred, but not limited to, embodiments of the present invention, the photovoltaic modules 2 are equipped with a relative one axis (azimuth) or two axes (azimuth + zenith) sunseeker, as well as a mechanical moving equipment, suitable to automatically put them in a vertical rest position, so that each module 2 is parallel to the roadway, at night, in order to not compromise (by creating any shadows) the proper illumination of the road (position shown in figures 6 and 7 attached). In a further embodiment the photovoltaic modules 2 are provided with a sunseeker having only one rotation axis around the pole suitable to place them, at night, in a position parallel to the roadway and opposite to the road projector 4, in order to not compromise (by creating possible shadows) the proper illumination of the road.

Moreover, as already anticipated, the photovoltaic modules 2 are electrically connected with the projector 4, which contains an electronic device for the energy conversion (photovoltaic inverter), which integrates, in turn, the control electronics of the light source used (high-pressure gas discharge lamp or LED lamp), the control electronics of the drive motor of each photovoltaic modules 2 and the supervision and remote management electronics.

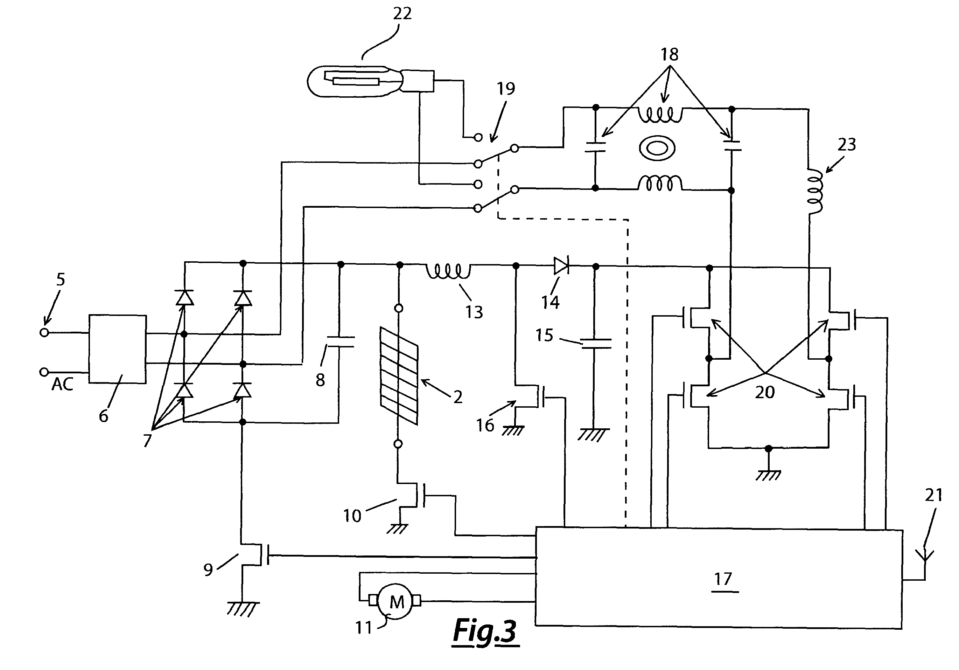

Figure 3 shows the circuit diagram of the electronic device for lamp switching on and energy conversion, built-in in the projector 4, which includes a connector 5 for the connection with 230 Volts AC (alternating current) electric system, an anti-noises filter 6, a rectifier bridge formed by a plurality of diodes 7, a levelling capacitor 8, a static switch 9 for the connection with the rectifier network during night operation, a static switch 10 for the connection of the photovoltaic module 2 with the converter input during day operation, one or more motors 11 for moving the photovoltaic modules or panels 2, an inductor 13 of the boost converter, a diode 14 of the boost converter, a capacitor 15 for energy storage at the outlet of the boost converter, a MOSFET transistor 16 of the boost converter and a block 17 of control and management of the electronic device which, as a whole, incorporates an auxiliary feeder for the services, a microcontroller, a radio transmitter, for example of the FH-DSSS type, equipped with an antenna 21, and all the control and measure circuitry of the generated and supplied power.

The electronic device of switching on and energy conversion also comprises a H bridge 20 which constitutes a complete inverter, built with transistors, for example of MOSFET or IGBT type, a set of reactive components 18 for the filtering and the interface with the bridge 20 output, an inductor 23 arranged in series to the bridge 20 and a relay 19 for switching the output, which is directly connected with the lighting lamp 22 of the projector 4 (for example, of sodium vapours, at high pressure, type). The operation of the integrated structure equipment for the public road lighting, which is the object of the present invention, is essentially as follows.

During night, the photovoltaic panel o module 2 is switched off and the lamp 22 is switched on, since the switch 9 conducts while the switch 10 is off, while the relay 19 is in a position according to which the output of the reactive block 18 is directly connected with the lamp 22.

Electricity is taken from the network and, through the filter 6 and the rectifier 7, supplied to the boost converter, of PFC type ("Power Factor Controlled", that is controlled power factor) formed by the inductor 13, the diode 14, the capacitor 15 and the transistor 16.

The stabilized voltage, which can supply the full bridge power converter consisting of the reactive components 18, the bridge 20 and the inductor 23, is at the output of the boost converter, on the capacitor 15; this stage adjusts the voltage of the lamp 22 to a proper value, through a principle of piloting, for example, at square wave and low frequency, of the known and traditional type.

The striking circuits of the lamp 22, which are intended to be made according to the prior art, are omitted, for simplicity, in the diagram of figure 3.

The adjustment of the electrical parameters of the lamp 22 is performed by the microcontroller embedded in the block 17, through the modulation of the commands given to the transistors of the bridge 20.

During day, the photovoltaic module or panel 2 is on while the lamp 22 is off, since the switch 9 is off while the switch 10 conducts, while the relay 19 is in a position according to which the output of the reactive block 18 is directly connected with the electric network 5 through the filter 6 (position schematized in figure 3 attached).

In this condition, the boost converter consisting of the elements 13, 14, 15 and 16 is used to raise the output voltage of the photovoltaic module 2 to a value necessary for the energy supply to the network and however higher than the peak voltage of the network (this level is equal to about 330-340 Volts), since the photovoltaic modules 2 present a much lower voltage (for example, the generating voltage is around 20-30 Volts in case the photovoltaic modules 2 are of the type of 150 Watts as total power).

The bridge 20 stage inverts the output voltage of the boost converter and applies a sinusoidal current control modulation, required for the supply of electric current at 50 Hz to the electric network 5, by means of the inductor 23, the reactive block 18, the relay 19 and the filter 6.

The commands of the switch 10 and the switching devices of the bridge 20 are suitably generated by the microcontroller embedded in the block 17.

It is understood, therefore, as the same electronic components are advantageously used, during the day, for the photovoltaic generation, and, during the night, for the supply of the lamp 22.

Furthermore, the electronic device outlined in figure 3 comprises circuits, which are not detailed for the sake of brevity, for managing the low voltage motors 11, necessary for moving the modules 2, while the block 17 incorporates appropriate circuits for measuring the power generated by the photovoltaic modules 2 and fed into network during the day and for the measurement of the energy supplied to the lamp 22 during the night.

In addition, the block 17 incorporates a two-way radio which, with its own antenna 21, allows the connection and exchange of information with other devices 1 and the control unit of the system.

The photovoltaic solar modules 2 are preferably mounted on a moving device, for example with two axis, which allows the angular orientation thereof, both in azimuth direction and in zenith direction.

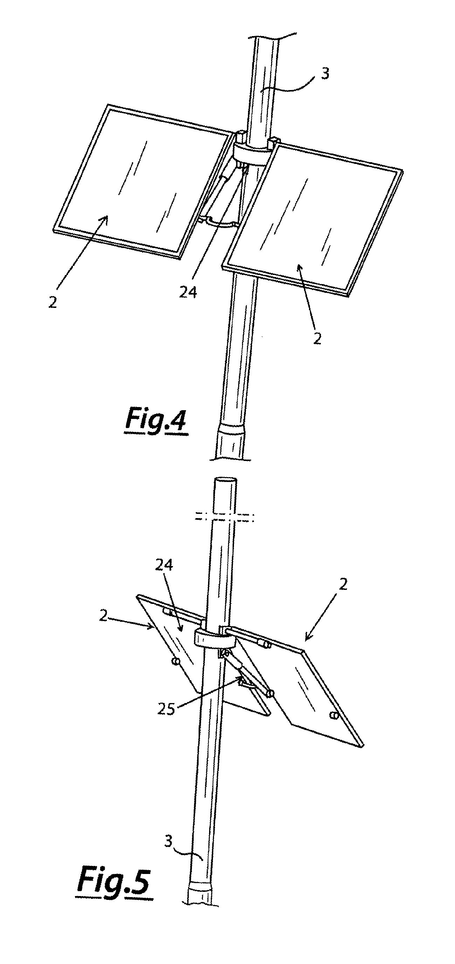

At preferential title, in the appended figures 4 and 5 the photovoltaic modules 2 are shown, respectively, according to a front view and a rear view, in a day working position, that is properly oriented towards the sun in order to track its apparent motion.

The rotation in the azimuth direction is performed by the fifth wheel 24 which provides an electric motorization and thanks to which it is also possible to rotate the photovoltaic modules or panels 2 till a night rest position, according to which they are parallel to the roadway (as shown in the attached figures 6 and 7).

Moreover, the electrical jacks 25 allow the inclination in zenith direction of the modules 2 in zenith direction, thanks to which it is possible to track the elevation modifications of the sun during the day apparent motion; the same electrical jacks 25 also allow to put the modules 2 vertically during the night, in order to avoid throwing shadows on the road.

Other solutions, not described, can be made with the single axis sunseeker, that is only of azimuth kind, which comprise mechanisms allowing, with a single motor, to bring the modules 2 to a rest position, after having got over the end of stroke of the azimuth tracking motion using special leverages.

The control unit of the system, present in the block 17 and provided with FH-DSSS two-way radio, is able to give commands and receive controls from each pole 3 of the photovoltaic system and is also equipped with GSM interface for the remote control.

In particular, through the unit of the system unit, it is possible to:
- plan the operation of all the devices of the system;
- measure the power and energy generated by each single photovoltaic module 2;
- measure and configure the operation of each single projector 4, determining its brightness level, on/off time, etc.

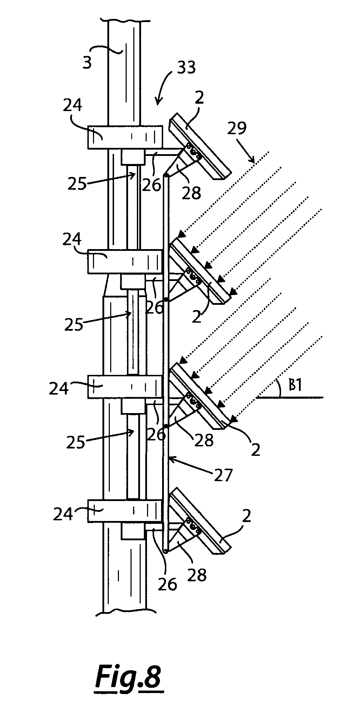

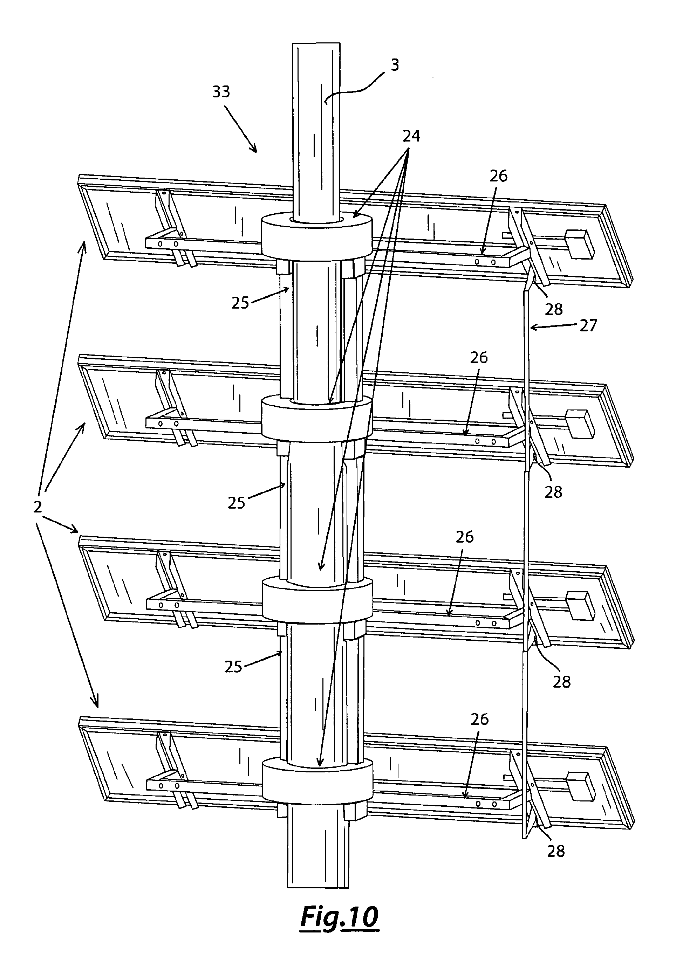

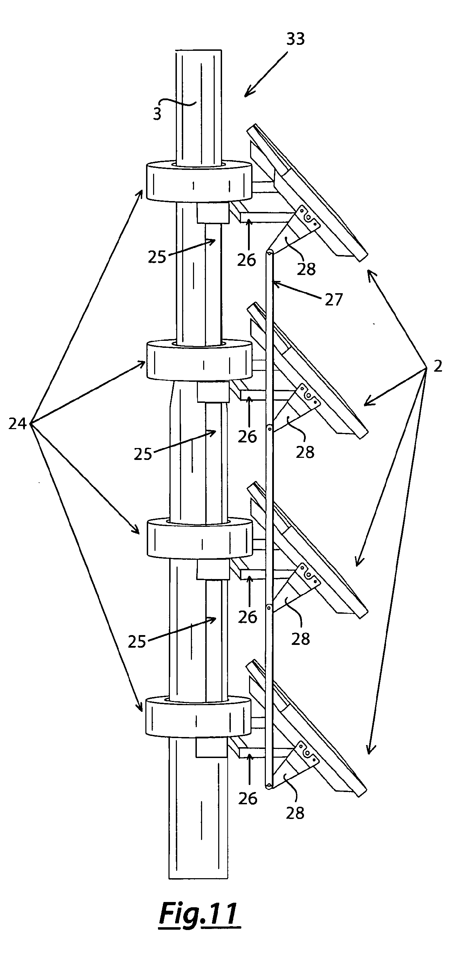

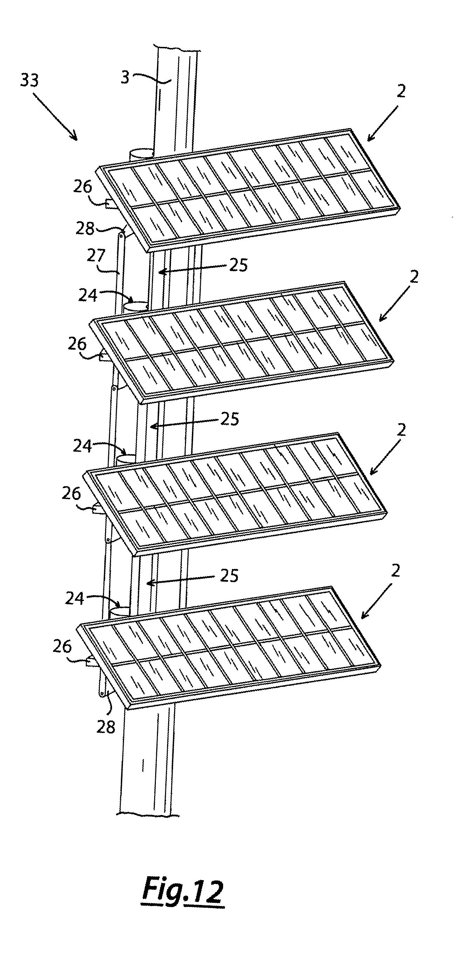

Figures 8, 9, 10, 11 and 12 show an example of construction of the integrated structure equipment for the public road lighting, according to the invention, in which some long and narrow particular photovoltaic modules or panels 2 (doors) can be arranged vertically aligned, forming a structure mounted parallel to the pole 3 (modules with horizontal doors with one single or double axis tracking).

These figures show specifically a group 33 consisting of four photovoltaic modules 2, mounted on the lighting pole 3, thanks to the support structures 26.

In addition, the group 33 of the modules 2 is able to rotate around the pole 3 thanks to the fifth wheels 24, at least one of which motorized; in this way it is possible to a complete azimuth sunseeker.

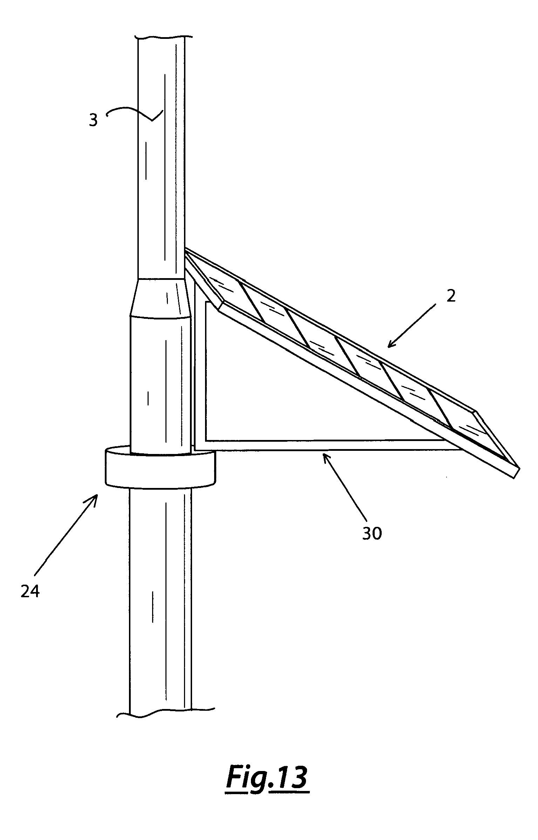

As far as the zenith adjustment is concerned, two alternative solutions are possible:
- with zenith sunseeker, powered by the motorized moving, with a suitable jack not shown in figure, of the vertical rod 27, connected with the rear of each photovoltaic module 2 through suitable brackets 28;
- with zenith position, fixed at an optimal and not changeable value, for example equal to 45° of inclination (thus without motorization), as shown by way of example in figure 13.

In this case, the group 33 rotates around the lighting pole 3 during the day, tracking the sun apparent motion from east to west, while during the night, the group 33, rotating around the pole 3, places itself in a rest position, according to which the modules 2 are parallel to the roadway and are positioned on the opposite side of the pole 3, with respect to the roadway, so as to not affect with their own shading the lighting performance of the projector 4 above.

In the embodiment with motorized zenith rotation, during the day, the tracking of the solar motion is carried out through a control algorithm of "zenith back-tracking" kind, according to which the motorized control keeps the motorized module 2 perpendicular to the sun rays 29 in order to maximize the energy produced (as shown in detail in the attached figure 8) until the angular inclination β1 of the sun rays 29 is such that to not produce the shading of the lower photovoltaic modules by the upper modules.

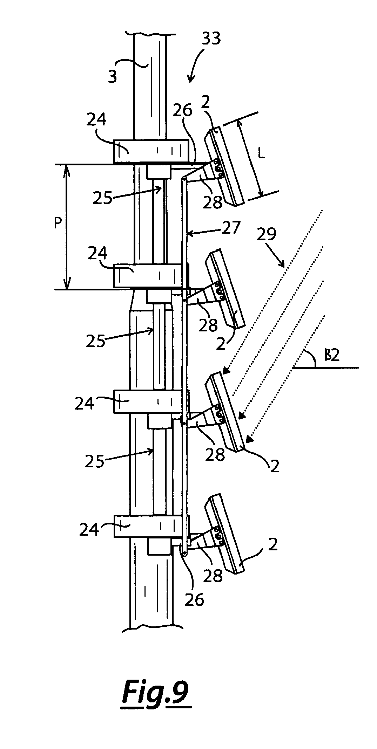

If, during moving of the modules 2, it is detected that the inclination β2 of the sun rays 29 would cause a shading condition if the modules arranged itself perpendicular to the sun rays 29, then the photovoltaic modules 2 are sloped of an angle such that to avoid shading of the modules below (as illustrated in detail in figure 9 attached). The management technique is based on an astronomical clock embedded in the electronic device inside the block 17; indeed, the algorithm takes into account the astronomical hour and through the radio network of communication with the unit of the system, the lamp is informed about the installation latitude at the beginning of the installation. In this way the control algorithm, depending on the solar hour and solar ephemeris calculated on the basis of the installation latitude, is able to optimize the zenith rotation in order to avoid the phenomenon of mutual shading of the modules. It is also possible to achieve optimum size for maximizing the energy generated, avoiding, thanks to the "zenith back-tracking" control, an excessive spacing of the photovoltaic modules 2 in vertical direction; in this way, it is possible, for example, to minimize the ratio P/L (with P = distance between the barycentre of two successive modules mounted vertically and L = width of each module) so as to get an ideal compromise. Figure 13 shows a further possible embodiment of the integrated structure equipment for the public road lighting, according to which a photovoltaic module 2 is mounted on a bracket-shaped support 30, having fixed inclination, which rotates around the lighting pole 3 thanks to the motorized fifth wheel 24.

In this solution, the module 2 automatically tracks the apparent solar motion during the day, rotating from east to west, while during the night, it arranges itself in a rest position, parallel to the roadway, on the opposite side of the pole 3, with respect to roadway, so as to not affect with its own shading the lighting performance of the projector 4 of the related pole 3. One of the most interesting advantages of the embodiment shown in figures 8, 9, 10, 11 and 12 stands in the compactness, thanks to the reduced projection of the photovoltaic group 33, compared to the other traditional solutions and compared to the solution illustrated in figure 13. Indeed, for example, the peak power being equal and, therefore, the total area of the photovoltaic modules 2 being equal, the overall dimensions of the projection from the pole 3 in the embodiment of figure 3 is significantly greater than that one of the group of modules 33, shown in figures 8, 9, 10, 11 and 12.

In addition, the group 33, thanks to the possibility to vary the inclination of the photovoltaic modules 2, may integrate a diagnostic system able to automatically secure the system itself in case of strong mechanical stresses, for instance, caused by a great wind speed incident the structure.

In this case, the system provides several possible embodiments, such as, for example:
- the insertion of some vibration sensors into the photovoltaic modules 2, able to measure the mechanical stresses to which they are submitted and/or
- the use of an anemometer on the pole 3 or on the control unit of the system.

In the case of the first executive solution, the electronic control device embedded into the block 17 incorporates a suitable signals conditioning circuit generated by these sensors and a firmware of analysis of these signals implemented onto the microcontroller of the block 17.

Such a firmware produces an algorithm which is able to define some actions for securing the structure; in particular, when the stresses exceed intensity such as to imply, for example, the overcoming of 20% of the danger threshold for the structure, a control device of the drive motor 11 immediately brings the modules 2 in the horizontal rest position, so as to provide a smaller surface exposed to wind and thus immediately secure the whole structure.

The second executive solution requires that the anemometer (installed in "centralized" way, for example, by using an anemometer for each electronic supervision unit, which is typically used every twenty lighting poles) measures the wind conditions locally in the area where the poles 3 are installed.

When the wind speed exceeds a programmed maximum value, the electronic supervision unit sends, via radio, appropriate commands to all the electronic control devices embedded in the block 17 and installed on the various poles 3 in order to secure the related photovoltaic modules 2. In such a case, the control devices of the drive motor 11 immediately put the modules 2 in the horizontal rest position, until the wind speed decreases and takes less dangerous values.

In fact, for such structures type the hardest operation condition is represented by the strong speed winds which would oblige, lacking other countermeasures, to very costly scaling of the structures of foundation and support of the lighting poles 3.

Thanks, instead, to the implemented technique of automatic placing in the horizontal position of the photovoltaic modules 2, in accordance with the present invention, it is also possible to apply the described equipment even to pre-existing lighting poles 3 and eventually not scaled in such a way as to support dynamic loadings of strong intensity deriving from extreme weather events.

From the description made, the technical features of the integrated structure equipment for the public road lighting, which is the object of the present invention, as well as the resulting advantages, are clear.

It is, finally, clear that several other variants could be made to the lighting equipment in question, without for this reason going out of the novelty principles inherent to the inventive idea, as it is clear that, in the practical implementation of the invention, materials, shapes and sizes of the illustrated details could be any, depending on the needs, and the same could be replaced with others technically equivalent.

## Claims

1. Integrated structure equipment for the public road lighting comprising a series of devices (1) applied to respective poles (3) of public lighting plants, wherein each device (1) includes one or more photovoltaic modules or panels (2) which are mechanically fixed to the relative lighting pole (3), at a set height of said pole (3), and properly oriented and/or sloped with respect to a horizontal plane, so that said device (1) incorporates the functions of:
- illuminating apparatus for the public night lighting, through at least one lighting projector (4), housed on said pole (3) and including at least one lighting source, and
- photovoltaic generator, through at least one electronic device, suitable for supplying said lighting source and for converting photovoltaic energy, generated by said photovoltaic modules (2) in presence of sunlight, into electricity to be put in the electric supply network at night, in absence of sunlight.

2. Public lighting equipment as claim 1, **characterized in that** said photovoltaic modules (2) are of the fixed or mobile type, with one or two axes mechanical moving, for the solar tracking.

3. Public lighting equipment as claim 1, **characterized in that** said electronic device of supply of the lighting source and conversion of the generated photovoltaic energy is housed inside said lighting projector (4).

4. Public lighting equipment as claim 1, **characterized in that** an electronic control and management unit of a public road lighting plant consisting of a plurality of said devices (1), each of which can be referred to a respective lighting pole (3), is provided.

5. Public lighting equipment as claim 1, **characterized in that** said photovoltaic modules (2) are moved, at night, by means of a mechanical device, suitable to automatically put them in a rest position, according to which said modules (2) are parallel to the axis of at least one carriageway, in order not to jeopardize the proper road lighting.

6. Public lighting equipment as claim 2, **characterized in that** said electronic supply and energy conversion device integrates an electronic circuit of control of said lighting source, a drive circuit of at least one drive motor (11) of each module photovoltaic (2) and an electronic remote control and supervision unit of at least one public road lighting plant.

7. Public lighting equipment as claim 1, **characterized in that** said electronic supply and energy conversion device includes at least one control and management block (17), which incorporates an auxiliary feeder for the services, a microcontroller, a radio transmitter, for example of the FH-DSSS type, which allows the connection and data exchange with other devices (1) and with an electronic remote control and supervision unit, and the control and measurement circuits of the electrical parameters of said lighting source and the generated and supplied power.

8. Public lighting equipment as claim 1, **characterized in that** said photovoltaic modules (2) are mechanically fixed to said lighting pole (3) through at least one motorized fifth wheel (24), suitable for carrying out a rotation of said modules (2) in the azimuth direction.

9. Public lighting equipment as claim 1, **characterized in that** said photovoltaic modules (2) can be sloped, in the zenith direction, through electric jacks (25) fixed to said lighting pole (3).

10. Public lighting equipment as claim 1, **characterized in that** a series (33) of said photovoltaic modules (2) is vertically aligned, parallel to said lighting pole (3), to which are fixed through support structures (26), said modules (2) being rotated around said lighting pole (3) through respective fifth wheels (24), at least one of which motorized, for the adjustment of the position of said modules (2) in the azimuth direction.

11. Public lighting equipment as claim 10, **characterized in that** said photovoltaic modules (2) can be operated in the zenith direction through a motorized moving of at least one vertical rod (27), which is connected with all the vertically positioned photovoltaic modules (2).

12. Public lighting equipment as claim 10, **characterized in that** said photovoltaic modules (2) can be operated in a predetermined zenith position.

13. Public lighting equipment as claim 10, **characterized in that** said photovoltaic modules (2) are kept in the position perpendicular to the sunshine rays (29) until a certain angular inclination (β1) of said sunshine rays (29), with respect to a horizontal direction perpendicular to said lighting pole (3).

14. Public lighting equipment as claim 10, **characterized in that** said series (33) of photovoltaic modules (2) is fixed to said lighting pole (3) so as to minimize the ratio between the distance between the gravity centres of two subsequent vertically mounted modules (2) and the width of each module (2).

15. Public lighting equipment as claim 1, **characterized in that** at least one of said modules (2) is mounted on a bracket-shaped support (30) with a fixed inclination, which rotates around said lighting pole (3) by means of at least one motorized fifth wheel (24).

16. Public lighting equipment as claim 10, **characterized in that** said series (33) of photovoltaic modules (2) incorporates a diagnostic system, suitable for automatically securing said devices (1) in case of strong mechanical stresses, which includes one or more vibration sensors, positioned on said photovoltaic modules (2) and suitable for measuring the mechanical stresses to which said modules (2) are submitted, so that at least one control device of at least one drive motor (11) puts said modules (2) in a rest position, parallel to said pole (3), in case the measured mechanical stresses are greater than at least one prefixed threshold value.

17. Public lighting equipment as claim 10, **characterized in that** said series (33) of photovoltaic modules (2) incorporates a diagnostic system, suitable for automatically securing said devices (1) in case of strong mechanical stresses, which includes at least one anemometer, positioned on said lighting pole (3) or on an electronic remote management and supervision unit of a plant consisting of a plurality of said devices (1), said anemometer being suitable for measuring the wind intensity locally in the area where said devices (1) are installed, so that at least one control device of at least one drive motor (11) puts said modules (2) in a rest position, parallel to said pole (3), in case the measured mechanical stresses are greater than at least one prefixed threshold value.
